# EUROPEAN PATENT APPLICATION

(11) **EP 2 025 394 A1**
(43) Date of publication of application: **18.02.2009**
(21) Application number: 07743528.7
(22) Date of filing: 17.05.2007
(51) Int. Cl.: B01F 17/52, B01F 17/42, C09D 17/00

(54) **DISPERSING AGENT**

(30) Priority: 22.05.2006 JP 2006141049
(71) Applicant: Toagosei Co., Ltd, Minato-ku, Tokyo 105-8419 (JP)
(72) Inventor: MATSUNAGA, Morikatsu, Nagoya-shi, Aichi 455-0027 (JP); MORI, Yoshio, Nagoya-shi, Aichi 455-0027 (JP); TANAKA, Minoru, Nagoya-shi, Aichi 455-0027 (JP)
(74) Representative: Wilhelms · Kilian & Partner Patentanwälte
(86) International application number: PCT/JP2007/060093
(87) International publication number: WO 2007/135935

(57) **Abstract**

To provide a dispersing agent that contains a water-soluble polymer that has excellent dispersibility and stability over time even for a high concentration of a dispersoid such as a pigment and can give a pigment slurry having stable viscosity characteristics and redispersibility due to a large dispersion stabilization effect.

A dispersing agent containing a water-soluble polymer and/or an alkali metal salt or an ammonium salt of the water-soluble polymer, the water-soluble polymer containing (A) an ethylenically unsaturated monocarboxylic acid monomer or an anhydride thereof, or an ethylenically unsaturated dicarboxylic acid monomer or an anhydride thereof, and (B) a polyether compound, a ratio [(B)/(A)] of the number of moles of alkylene oxide added in component (B) relative to the number of moles of carboxyl group in component (A) being no greater than 0.6, and component (B) being less than 25 wt % relative to the total amount.

## Description

The present invention relates to a dispersing agent having excellent dispersibility and storage stability.

In general, polymers obtained by graft polymerization of an ethylenically unsaturated carboxylic acid on a polyalkylene glycol are well known, and are applied in many fields such as detergent builders, metal corrosion inhibitors, soil water-reducing agents, electronic component washing agents, deinking agents, bleaching adjuvants, anti-film forming agents, and sequestering agents.

Furthermore, cases in which the polymers are applied to cement dispersing agents (Patent Publications 1 to 2, etc.), and cement dispersing agents, bubble-forming agents, setting retarders, and fixatives produced by radical polymerization of a polyalkylene oxide and an ethylenically unsaturated carboxylic acid followed by formation of a derivative with a primary or secondary amine (Patent Publication 3) have been reported.

On the other hand, in order to disperse well and stably a dispersoid of an inorganic pigment such as calcium carbonate or titanium oxide, a dispersing agent comprising a nonionic polymer is used. Cases in which a mixture comprising a polyacrylic acid-based polymer and a water-soluble polymer or a water-soluble graft polymer obtained by polymerization of a carboxylic acid monomer and a polyether compound containing at least 50 mol % of a nonionic alkylene oxide without using a solvent is applied to a paper making pigment dispersing agent (Patent Publications 4 to 6), and a case involving application to a dispersing agent, etc. as a biodegradable polymer (Patent Publication 7) have been reported. The design of these polyether compounds, ethylenically unsaturated carboxylic acids, etc. used in water-soluble polymers is different for each application and, depending on the intended application, is not always satisfactory.
(Patent Publication 1) JP-A-10-236859 (Claims) (JP-A denotes a Japanese unexamined patent application publication.)
(Patent Publication 2) JP-A-2003-12358 (Claims)
(Patent Publication 3) JP-A-6-211949 (Claims)
(Patent Publication 4) JP-A-10-204320 (Claims)
(Patent Publication 5) JP-A-2004-76164 (Claims)
(Patent Publication 6) JP-A-2005-220492 (Claims)
(Patent Publication 7) JP-A-3-177406 (Claims)

In the light of the above-mentioned background, it is an object of the present invention to provide a novel dispersing agent that has excellent dispersibility for a dispersoid such as a pigment and can give a pigment slurry having stable viscosity characteristics due to a large dispersion stabilization effect and, more specifically, a dispersing agent, comprising a water-soluble polymer, that has excellent dispersibility even for a high concentration of a dispersoid, that can achieve low viscosity, that can suppress heat generation during grinding when used in for example the wet grinding of heavy calcium carbonate, and that gives a dispersion having excellent stability over time and good redispersibility.

As a result of an intensive investigation by the present inventors in order to solve the above-mentioned problems, it has been found that a dispersing agent comprising a nonionic water-soluble polymer having a polyether structure can solve the above- mentioned problems, and the present invention has thus been accomplished.

That is, the present invention is a dispersing agent comprising a water-soluble polymer and/or an alkali metal salt or ammonium salt of the water-soluble polymer, the water-soluble polymer comprising as essential components (A) an ethylenically unsaturated monocarboxylic acid monomer or an anhydride thereof, or an ethylenically unsaturated dicarboxylic acid monomer or an anhydride thereof, and (B) a polyether compound, a ratio [(B)/(A)] of the number of moles of alkylene oxide added in component (B) relative to the number of moles of carboxyl group in component (A) being no greater than 0.6, and component (B) being less than 25 wt % relative to the total amount.

In the present specification, acrylic acid or methacrylic acid is referred to as (meth)acrylic acid, and acrylate or methacrylate is referred to as (meth)acrylate.

The dispersing agent comprising a water-soluble polymer of the present invention exhibits good dispersion characteristics in an aqueous medium as a pigment slurry with a pigment as a dispersoid. Furthermore, no aggregation of the pigment or viscosity increase is observed over a long period of time, the stability over time of the slurry is excellent, and it is useful as an inorganic pigment dispersing agent, particularly in application to wet grinding in order to obtain a calcium carbonate slurry for paper making.

### 1. Water-soluble polymer

The dispersing agent of the present invention comprises a water-soluble polymer, and/or an alkali metal salt or ammonium salt of the water-soluble polymer, the water-soluble polymer comprising (A) an ethylenically unsaturated monocarboxylic acid monomer or an anhydride thereof, or an ethylenically unsaturated dicarboxylic acid monomer or an anhydride thereof, and (B) a polyether compound, a ratio [(B)/(A)] of the number of moles of alkylene oxide added in component (B) relative to the number of moles of carboxyl group in component (A) being no greater than 0.6, and component (B) being less than 25 wt % relative to the total amount. Details are explained below.

### (A) Ethylenically unsaturated mono- or di-carboxylic acid monomer or anhydride thereof

Component (A) constituting the water-soluble polymer of the present invention is an ethylenically unsaturated monocarboxylic acid monomer or an anhydride thereof, or an ethylenically unsaturated dicarboxylic acid monomer or an anhydride thereof.

The ethylenically unsaturated monocarboxylic acid monomer of the present invention is an ethylenically unsaturated monocarboxylic acid, or an alkali metal salt or an ammonium salt thereof. Specific examples thereof include (meth)acrylic acid, crotonic acid, vinylacetic acid, and acryloxypropionic acid. Among them, (meth)acrylic acid is a preferred ethylenically unsaturated monocarboxylic acid monomer.

The ethylenically unsaturated dicarboxylic acid monomer is an ethylenically unsaturated dicarboxylic acid, an alkali metal salt or an ammonium salt thereof, or a cis-dicarboxylic acid anhydride. Specific examples thereof include maleic acid, maleic anhydride, itaconic acid, mesaconic acid, fumaric acid, and citraconic acid. Among them, maleic acid, maleic anhydride, and itaconic acid are preferred ethylenically unsaturated dicarboxylic acid monomers.

Component (A) useful in the present invention is the above-mentioned acid, or an alkali metal salt or an ammonium salt thereof. Examples of an appropriate base that neutralizes an acid monomer in component (A) include inorganic alkali agents such as ammonia and an alkali metal hydroxide such as potassium hydroxide or sodium hydroxide, and organic amines such as diethanolamine and triethanolamine. The carboxylic acid monomer of component (A) is not neutralized or neutralized up to 0% to 60% before polymerization, and is neutralized up to 50% to 100%, and

preferably 50% to 100%, during polymerization or when made water-soluble after polymerization.

### Polyether compound (B)

The polyether compound (B) forming the polymer of the present invention is a water-soluble or alcohol-soluble compound having an alkylene oxide unit and containing a hydrogen atom that is adequately abstracted by a radical derived from a peroxide-based initiator. The alkylene group may be a completely straight chain such as polyethylene glycol, or a branched chain such as polypropylene glycol.

It is preferably polyethylene glycol, polypropylene glycol, polybutylene glycol, polyethylenetriol, polypropylenetriol, or a copolymer thereof. The polyalkylene oxide may be etherified at a chain terminus by an aliphatic or araliphatic group, and a corresponding aliphatic group in this case comprises 1 to 18 carbon atoms. The aliphatic group may further have a functional group such as a hydroxyl group, a sulfonyl group, an amino group, or a carboxyl group.

The polyether compound (B) may be obtained by polymerizing an alkylene oxide as a cyclic ether by a known method with water or an alcohol as an initiating site. Examples of the alcohol for giving the polyether compound include primary alcohols having 1 to 4 carbons such as methanol, ethanol, n-propanol, and n-butanol, secondary alcohols having 3 to 5 carbons, diols such as ethylene glycol, diethylene glycol, propanediol, butanediol, and propylene glycol, triols such as glycerol and trimethylolpropane, polyols such as sorbitol, and aromatic alcohols such as phenol, an alkylphenol, and naphthol. Examples of the cyclic ether include ethylene oxide, propylene oxide, and isobutylene oxide.

As the polyether compound (B) of the present invention, one obtained by esterifying a terminal hydroxy group of a polyether compound obtained as above with a fatty acid having 2 to 6 carbons, for example, a dicarboxylic acid such as succinic acid, succinic anhydride, maleic acid, maleic anhydride, or fumaric acid may be used.

For the polymer of the present invention, the ratio [(B)/(A)] of the number of moles of alkylene oxide added in component (B) relative to the number of moles of carboxyl group in component (A) is no greater than 0.6. It is not preferable for the molar ratio of the alkylene oxide group and the carboxyl group in the polymer to exceed 0.6 since the absorptivity of a polymer obtained onto a pigment decreases, and as a result the stability over time and re-dispersibility of a dispersion slurry become poor.

The content of the polyether compound (B) in the polymer is less than 25 wt % on the basis of the total weight of all monomers constituting the polymer, and preferably less than 20 wt %. When it is 25 wt % or greater, the stability over time of a dispersion becomes poor and the water solubility might not be maintained.

The polyether compound (B) dissolves in water or an alcohol in any proportion at around room temperature. As a method for polymerizing with component (A), there can be cited a method (1) in which graft polymerization is carried out in an alcohol using an alcohol-soluble peroxide-based initiator, the alcohol solvent is then removed, and neutralization/water-solubilization are carried out, a method (2) in which polymerization is carried out in water at 80°C or higher using a water-soluble peroxide-based initiator, etc. Method (2) can be carried out at a lower cost than that for method (1), and since polymerization progresses in a homogeneous system, it is desirable that the cloud point of a 1% aqueous solution of the polyether compound is at least 80°C.

The molecular weight of these polyether compounds is 100 to 10000, preferably 100 to 3000, and more preferably 100 to 1800. When the molecular weight is less than 100, the graft ratio decreases, and the wettability of the resulting water-soluble polymer toward a pigment deteriorates. When the molecular weight exceeds 10000, initial dispersion power for a pigment might deteriorate.

Furthermore, among the polyether compounds (B), a compound with an alkylene oxide unit having 3 to 4 carbons is preferable as the alkylene oxide, and one comprising a propylene oxide unit as an essential unit is particularly preferable. Other than the above, one obtained by copolymerizing ethylene oxide as an alkylene oxide that is copolymerizable with an alkylene oxide having 3 to 4 carbons is also included.

It is particularly desirable that the polyether compound (B) comprises a propylene oxide unit as an essential unit, and comprises at least one of (b1) a polypropylene oxide having a molecular weight of no greater than 700 or a derivative thereof, or (b2) a polyethylene glycol-polypropylene glycol copolymer comprising at least 60 wt %, of the total amount of compound-forming constituents, of polyethylene glycol.

When the polyether compound is (b1), the molecular weight is preferably 100 to 700 (the number of moles n of propylene glycol added being about 2 to 16), and more preferably 100 to 400 (n: about 2 to 6).

As specific examples of (b1), there can be cited dipropylene glycol, dipropylene glycol monomethyl ether, dipropylene glycol monoethyl ether, dipropylene glycol monopropyl ether, tripropylene glycol, tripropylene glycol monomethyl ether, tripropylene glycol monoethyl ether, tetrapropylene glycol, tetrapropylene glycol monomethyl ether, tetrapropylene glycol monoethyl ether, tetrapropylene glycol allyl ether, tetrapropylene glycol monopropyl ether, pentapropylene glycol, pentapropylene glycol monomethyl ether, pentapropylene glycol monoethyl ether, pentapropylene glycol allyl ether, pentapropylene glycol monopropyl ether, tripropylene glycol glyceryl ether, and hexapropylene glycol glyceryl ether.

When the polyether compound is (b2), it comprises a polyethylene glycol-polypropylene glycol copolymer comprising at least 60 wt %, of the total amount of constituents, of polyethylene glycol, and the molecular weight is preferably no greater than 5000, and more preferably no greater than 3000.

Specific examples of (b2) include a polyethylene glycol-polypropylene glycol having a molecular weight of 545 (ethylene oxide content 67 wt %), a polyethylene glycol-polypropylene glycol having a molecular weight of 1040 (ethylene oxide content 60 wt %), a polyethylene glycol-polypropylene glycol having a molecular weight of 1400 (ethylene oxide content 60 wt %), a polyethylene glycol-polypropylene glycol having a molecular weight of 1970 (ethylene oxide content 71 wt %), a polyethylene glycol-polypropylene glycol having a molecular weight of 2500 (ethylene oxide content 60 wt %), and a polyethylene glycol-polypropylene glycol having a molecular weight of 3000 (ethylene oxide content 60 wt %).

With regard to the polyether compound (B), only one type thereof or two or more types thereof may be used.

### (C) Other monomer

The water-soluble polymer of the present invention comprises component (A) and component (B) as essential constituents, and may comprise another monomer as a constituent in a range that does not impair the function of the polymer of the present invention (preferably no greater than 10 wt % of the total weight of monomers).

Examples of the other monomer include alkyl (meth)acrylates, hydroxyalkyl (meth)acrylates, (meth)acrylamides, vinyl acetate, N-vinylpyrrolidone, (meth)acryloylmorpholine, (meth)acrylonitrile, (meth)acrylamidoalkylalkanesulfonic acids, sulfonic acid-containing vinyl monomers, phosphoric acid group-containing vinyl monomers, and phosphate ester group-containing vinyl monomers.

Furthermore, there are also included crosslinking monomers such as methylenebis(meth)acrylamide, ethylenebis(meth)acrylamide, butanediol di(meth)acrylate, ethylene glycol di(meth)acrylate, polyethylene glycol di(meth)acrylate, polypropylene glycol di(meth)acrylate, trimethylolpropane tri(meth)acrylate, di(meth)acryloxyethylphosphite, triallyl cyanurate, triallyl isocyanurate, divinylbenzene, diallyl maleate, and polyallylsucrose, which have two or more vinyl groups per molecule.

Specific examples of the alkyl (meth)acrylates include methyl (meth)acrylate, ethyl (meth)acrylate, propyl (meth)acrylate, butyl (meth)acrylate, 2-ethylhexyl (meth)acrylate, cyclohexyl (meth)acrylate, lauryl (meth)acrylate, and stearyl (meth)acrylate.

Specific examples of the hydroxyalkyl (meth)acrylates include 2-hydroxyethyl (meth)acrylate, 3-hydroxypropyl (meth)acrylate, 4-hydroxybutyl (meth)acrylate, ω-hydroxypolyalkylene glycol (n = 2 to 30) (meth)acrylate, and ω-hydroxypolycaprolactone (meth)acrylate.

Specific examples of the (meth)acrylamidoalkylalkanesulfonic acids include 2-acrylamido-2-methylpropanesulfonic acid, acrylamidomethanesulfonic acid, acrylamidoethanesulfonic acid, and acrylamidobutanesulfonic acid.

Specific examples of the sulfonic acid-containing monomers include (meth)allylsulfonic acid, styrenesulfonic acid, α-methylstyrenesulfonic acid, isoprenesulfonic acid, vinyltoluenesulfonic acid, (meth)allyloxybenzenesulfonic acid, (meth)allyloxy-2-hydroxypropylsulfonic acid, 3-sulfopropyl (meth)acrylate, and bis(3-sulfopropyl) itaconate.

Specific examples of the phosphoric acid group-containing vinyl monomers include mono(2-hydroxyethyl acrylate) acid phosphate, mono(2-hydroxyethyl methacrylate) acid phosphate, mono(2-hydroxypropyl acrylate) acid phosphate, mono(2-hydroxypropyl methacrylate) acid phosphate, mono(3-hydroxypropyl acrylate) acid phosphate, and mono(3-hydroxypropyl methacrylate) acid phosphate.

Specific examples of the phosphate ester group-containing vinyl monomers include diphenyl-2-acryloyloxyethylphosphate, diphenyl-2-methacryloyloxyethylphosphate, dimethyl-2-methacryloyloxyethylphosphate, diethyl-2-methacryloyloxyethylphosphate, and dipropyl-2-methacryloyloxyethylphosphate.

With regard to the above-mentioned other monomer, only one type thereof or two or more types thereof may be used.

### 2. Preparation of water-soluble polymer

As a process for producing the water-soluble polymer of the present invention, a solution polymerization method, an aqueous solution polymerization method, an ion polymerization method, a high temperature high pressure polymerization method, a suspension polymerization method, etc. are known, and in order to synthesize the water-soluble polymer of the present invention, from the viewpoint of ease of a polymerization operation and ease of adjustment of the degree of polymerization, a solution polymerization method, an aqueous solution polymerization method, and a high temperature high pressure polymerization method at 160°C or below are preferable. Synthesis of the water-soluble polymer of the present invention is preferably carried out by a method employing a radical polymerization initiator since the polymerization operation and adjustment of the molecular weight are easy and production is possible at low cost, and an aqueous solution polymerization method is more preferable.

The polymer of the present invention is obtained by a polymerization reaction of (A) an ethylenically unsaturated monocarboxylic acid monomer or an anhydride thereof, or an ethylenically unsaturated dicarboxylic acid monomer or an anhydride thereof, and (B) a polyether compound, or a mixture thereof with (C) another monomer as desired, in the presence of a radical polymerization initiator, and preferably comprises as a main component a graft polymer formed from components (A), (B), and (C).

In the synthesis of the water-soluble polymer, as the radical polymerization initiator a normally used peroxide-based initiator may be used. Specific examples thereof include water-soluble persulfate salts such as sodium persulfate, potassium persulfate, and ammonium persulfate, hydroperoxides such as *t*-butyl hydroperoxide, cumene hydroperoxide, diisopropylbenzene hydroperoxide, *p*-menthane hydroperoxide, 2,5-dimethylhexane-2,5-dihydroperoxide, and 1,1,3,3-tetramethylbutyl hydroperoxide, and hydrogen peroxide.

Furthermore, there can be cited oil-soluble ketone peroxides such as methyl ethyl ketone peroxide and cyclohexanone peroxide, dialkyl peroxides such as di-*t-*butyl peroxide, *t*-butylcumyl peroxide, dicumyl peroxide, α,α'-bis(*t*-butylperoxy) *p-*diisopropylbenzene, and α,α'-bis(*t*-butylperoxy) p-diisopropylhexyne; peroxyesters such as *t*-butyl peroxyacetate, t-butyl peroxylaurate, *t*-butyl peroxyrabenzoate, di-*t-*butyl peroxyisophthalate, 2,5-dimethyl-2,5-di(benzoylperoxy)hexane, *t*-butyl peroxyisopropylcarbonate; peroxyketals such as *n*-butyl-4,4-bis(t-butylperoxy)valeate, and 2,2-bis(*t*-butylperoxy)butane; and diacyl peroxides such as dibenzoyl peroxide.

Among them, peroxides such as hydrogen peroxide and persulfate salts are preferable since the molecular weight is easily controlled and their decomposition temperature is low. They may be used singly or in a combination of two or more types.

The amount of polymerization initiator used is not particularly limited, and is preferably 0.1 to 15 wt % relative to the total amount of monomers, and more preferably 0.5 to 10 wt %. When it is less than this range, the graft ratio of monomer on polyether decreases. It is undesirable that the amount is greater than this range since the polymerization initiator remains after polymerization, and there is a possibility that the stability of the polymer will be degraded or the dispersibility will be affected. Furthermore, the polymerization initiator may be added to a polyether in advance, but it may be added at the same time as a monomer is added.

Moreover, a water-soluble redox initiator may be used. Examples of this initiator include reducing agents that can be used with an appropriate oxidizing agent, for example, the above-mentioned polymerization initiator, such as sodium bisulfite, sodium sulfite, isoascorbic acid, formaldehyde-sodium sulfoxylate, and sodium hydrosulfite, and also iron alum and potassium alum, but are not limited thereto. When used, the redox initiator is used in an amount of 0.05% to 8% relative to the total weight of monomers. A preferred range is 0.5 to 5 wt % of the total monomers. Many of these initiators introduce a by-product salt into the polymer product. It is preferable for the amount of initiator used to be a minimum.

Furthermore, in order to adjust the molecular weight of the water-soluble polymer produced, an appropriate amount of a chain transfer agent such as mercaptoacetic acid, mercaptopropionic acid, 2-propanethiol, 2-mercaptoethanol, thiophenol, dodecylmercaptan, or thioglycerol may be added to a polymerization system.

When the water-soluble polymer of the present invention is produced, it is normally carried out in a solvent using a polymerization initiator.

When an aqueous solution polymerization method is employed, water is preferably used on its own as a solvent, but as necessary a hydrophilic organic solvent may be added to water as appropriate. The hydrophilic organic solvent is not particularly limited, examples thereof including lower alcohols such as methanol, ethanol and 2-propanol; amides such as dimethylformamide; ketones such as acetone; and ethers such as 1,4-dioxane, and one type or two or more types may be selected from the above as appropriate and used. The proportion of hydrophilic organic solvent added is preferably no greater than 20 wt % relative to the total amount of a mixed solvent with water. When it exceeds 20 wt %, there is a possibility that a copolymer thus obtained might be separated and/or precipitated.

When a solution polymerization method is employed, it is desirable that an alcohol, in particular, a low boiling point alcohol having 1 to 4 carbons, which is easy to subsequently remove, is used as a solvent. Specific examples thereof include methanol, ethanol, isopropanol, n-propanol, n-butanol, sec-butanol, and *tert-*butanol.

The polymerization temperature during a polymerization reaction is preferably 50°C to 150°C, and more preferably 60°C to 100°C. When it is lower than 50°C, the graft ratio of the monomer onto the polyether decreases. When it is higher than 150°C, there is a possibility that the polyether and the copolymer thus formed will thermally decompose. A preferred polymerization time is 3 to 25 hours.

The molecular weight of the polymer of the present invention is preferably 1,000 to 100,000 as a weight-average molecular weight (Mw) determined by gel permeation chromatograph (GPC) with polystyrene as a reference material, and more preferably in the range of 1,000 to 30,000 from the viewpoint of appropriate dispersibility and appropriate solution viscosity being obtained. A polymer with an Mw of less than 1,000 cannot give a sufficient dispersion effect, and when the Mw exceeds 30,000, the viscosity increases, it becomes insoluble, or a lumpy material is formed, and it does not function as a dispersing agent. Furthermore, a number-average molecular weight (Mn) is preferably 500 to 15,000, and more preferably in the range of 1,000 to 5,000 from the viewpoint of appropriate dispersibility and appropriate solution viscosity being obtained. A polymer with an Mn of less than 500 cannot give a sufficient dispersion effect, and when the Mn exceeds 15,000, the viscosity increases, it becomes insoluble, or a lumpy material is formed, and it does not function as a dispersing agent.

The water-soluble polymer of the present invention is obtained as an aqueous solution or a solution depending on the production process or the type of posttreatment. When an organic solvent is contained, the solvent is removed by distillation, vacuum distillation, drying, etc. and, for example, neutralization with an alkali is then carried out to thus make it water-soluble.

With regard to the dispersing agent of the present invention, the water-soluble polymer obtained above may be used on its own as it is or as a solution in a solvent such as water or an alcohol, but it may be used by adding a base thereto. Examples of the base include alkali metal salts such as sodium salts and potassium salts, alkaline earth metal salts such as calcium salts, trivalent metal salts such as aluminum salts, ammonium salts, and organic amine salts such as monoethanolamine and triethanolamine. In addition thereto, an emulsion-based latex, a viscosity-adjusting agent, a fragrance, an antioxidant, a UV absorber, a biocide, an antiseptic, etc. may be added. As a solvent used when adding them, water is preferable.

### 3. Application

The dispersing agent of the present invention may be used in various applications, and examples thereof include a dispersing agent for ceramic particles, a dispersing agent for agrochemical granules, a dispersing agent for mud, a dispersing agent for cement, a dispersing agent for scale dispersion, a dispersing agent for a detergent builder, a dispersing agent for an inorganic pigment, and a dispersing agent for an organic pigment.

Among these applications, it is particularly useful as an inorganic pigment dispersing agent, particularly, in a wet grinding application in a paper making process.

Specific examples of each application include dispersing agents for use in production processes for ceramics such as ferrite, alumina, zirconia, barium titanate, silicon carbide, cordierite, and aluminum hydroxide, and dispersing agents for agrochemical granules such as an insecticide, a biocide, a herbicide, and a miticide. Moreover, examples of the mud use include a dispersing agent for excavated slurry and a dispersing agent for sewage sludge cake and for water purification sludge cake, examples of the cement use include a dispersing agent for mortar and a dispersing agent for concrete, examples of the scale dispersion use include dispersing agents for calcium carbonate, calcium phosphate, silica, etc., scale, and examples of the detergent builder use include dispersing agents added to washing agents such as detergent builders for a powder detergent for clothing, a liquid detergent for clothing, a liquid detergent for dishes, a bleaching powder detergent, and a bleaching liquid detergent.

Examples of the inorganic pigment use include dispersing agents for calcium carbonate wet grinding, for a light calcium carbonate production process, and for recycle sludge and a causticized light calcium carbonate production process, and examples of the organic pigment use include dispersing agents for aqueous ink pigments.

Examples of pigments for which the dispersing agent of the present invention is effective include: as inorganic pigments, extender pigments such as mica, talc, kaolin, calcium carbonate, silicic anhydride, aluminum oxide, and barium sulfate; colored pigments such as colcothar, yellow iron oxide, black iron oxide, chromium oxide, ultramarine, prussian blue, and carbon black; white pigments such as titanium dioxide and zinc oxide; pearlescent pigments such as titanated mica, fish scale foil, and bismuth oxychloride; and special function pigments such as boron nitride, photocromic pigments, synthetic fluophlogopite, and microparticulate composite powders: as organic synthetic colorants, dyes, lakes, and organic pigments: and as natural colorants, β carotene and carthamin, and one type or two or more types may be selected therefrom.

When used as a dispersing agent for soil and ground improvement, it is used as a dispersing agent for a mixture of cement milk and clay. As the clay used here, various types such as bentonite, kaolin, and mud produced by excavation work may be used. Furthermore, the dispersing agent of the present invention is very useful as a dispersing agent for bentonite from excavated slurry.

### EXAMPLES

The present invention is now explained more specifically by reference to Examples and Comparative Examples. In each Example below, '%' and 'parts' denote 'wt %' and 'parts by weight' respectively.

### Example 1 (production of polymer E1)

A 3 L five-necked separable flask was charged with 51 g (corresponding to 10%) of polypropylene glycol (number of moles of propylene glycol added = 4, molecular weight 250) and 1528 g of deionized water. While stirring the contents of the separable flask at a stirring speed of 260 rpm (rotation/min), the external temperature was controlled at 120°C by means of an oil bath and it was refluxed using a condenser with the internal temperature stable at 100°C, which is the boiling point of water, and (1) a monomer mixed aqueous solution prepared by mixing 459 g (corresponding to 90%) of acrylic acid and 45.3 g of deionized water, and (2) an initiator aqueous solution prepared by mixing 81.9 g of a 35% hydrogen peroxide aqueous solution, 7.76 g of sodium persulfate, and 23.3 g of deionized water were continuously supplied over 3 hours. 5 minutes after starting the supply of (1) and (2) above, (3) 475.3 g of a 48% NaOH aqueous solution was continuously supplied over 175 minutes to thus continuously neutralize the acrylic acid. For 3 hours from starting the supply of (1) and (2) above water that had been returned was continuously cut at a rate of 1.54 g/min (total 277.8 g) from a lower part of the condenser.

Subsequently, after (4) an initiator aqueous solution prepared by mixing 1.0 g of sodium persulfate and 2.4 of deionized water was supplied all at once, the temperature was maintained as it was for 30 minutes, thus completing polymerization. Subsequently, the mixture was cooled to 60°C, and a polymer was taken out. An aqueous solution of polymer E1 having a weight-average molecular weight (Mw) of 6200 and a number-average molecular weight (Mn) of 2500 was thus obtained with a solids concentration of 27.5%.

### Example 2 (production of polymer E2)

The procedure of Example 1 was repeated except that a separable flask was charged with 102 g (corresponding to 20%) of polypropylene glycol (number of moles of propylene glycol added = 4, molecular weight 250), the amount of (1) acrylic acid was changed to 408 g (corresponding to 80%), and the amount of (3) 48 weight % NaOH aqueous solution was changed to 422.5 g, thus giving an aqueous solution of polymer E2 with a solids concentration of 27.4%, an Mw of 6000, and an Mn of 2500.

### Example 3 (production of polymer E3)

The procedure of Example 1 was repeated except that a separable flask was charged with 51 g (corresponding to 10%) of maleic acid, the amount of (1) acrylic acid was changed to 408 g (corresponding to 80%), and the amount of (3) 48% NaOH aqueous solution was changed to 455.5 g, thus giving an aqueous solution of polymer E3 with a solids concentration of 27.4%, an Mw of 5500, and an Mn of 2500.

### Example 4 (production of polymer E4)

The procedure of Example 1 was repeated except that a separable flask was charged with 51 g (corresponding to 10%) of polypropylene glycol (number of moles of propylene glycol added = 3, molecular weight 192), thus giving an aqueous solution of polymer E4 with a solids concentration of 27.4%, an Mw of 5400, and an Mn of 2200.

### Example 5 (production of polymer E5)

The procedure of Example 1 was repeated except that a separable flask was charged with 102 g (corresponding to 20%) of polypropylene glycol/polyethylene glycol copolymer (number of moles of propylene glycol added = 3, number of moles of ethylene glycol added = 8, molecular weight 545, ethylene oxide content 67%), the amount of (1) acrylic acid was changed to 408 g (corresponding to 80%), and the amount of (3) 48% NaOH aqueous solution was changed to 422.5 g, thus giving an aqueous solution of polymer E5 with a solids concentration of 27.4%, an Mw of 6000, and an Mn of 2800.

### Example 6 (production of polymer E6)

The procedure of Example 1 was repeated except that a separable flask was charged with 51 g (corresponding to 10%) of polypropylene glycol monomethyl ether (number of moles of propylene glycol added = 4, molecular weight 264), thus giving an aqueous solution of polymer E6 with a solids concentration of 27.4%, an Mw of 5800, and an Mn of 2600.

### Example 7 (production of polymer E7)

The procedure of Example 1 was repeated except that a separable flask was charged with 51 g (corresponding to 10%) of tripropylene glycol glyceryl ether (number of moles of propylene glycol added = 3, molecular weight 266), thus giving an aqueous solution of polymer E7 with a solids concentration of 27.4%, an Mw of 5900, and an Mn of 2600.

### Comparative Example 1 (production of polymer C1)

The procedure of Example 1 was repeated except that the polyether compound was not used, the amount of (1) acrylic acid was changed to 510.0 g (corresponding to 100%), and the amount of (3) 48% NaOH aqueous solution was changed to 528.2 g, thus giving an aqueous solution of polymer C1 with a solids concentration of 27.4%, an Mw of 5500, and an Mn of 2800.

### Comparative Example 2 (production of polymer C2)

The procedure of Example 1 was repeated except that a separable flask was charged with 142.8 g (corresponding to 28%) of polypropylene glycol/polyethylene glycol copolymer (number of moles of propylene glycol added = 17, number of moles of ethylene glycol added = 2.5, molecular weight 1120, ethylene oxide content 10%), the amount of (1) acrylic acid was changed to 367.2 g (corresponding to 72%), and the amount of (3) 48% NaOH aqueous solution was changed to 380.4 g. It was found that polymerization did not progress uniformly, and a water-soluble polymer C2 could not be obtained.

### Comparative Example 3 (production of polymer C3)

The procedure of Example 1 was repeated except that a separable flask was charged with 255 g (corresponding to 50 weight %) of polypropylene glycol (number of moles of propylene glycol added = 4, molecular weight 250), the amount of (1) acrylic acid was changed to 255 g (corresponding to 50%), and the amount of (3) 48% NaOH aqueous solution was changed to 264.1 g, thus giving an aqueous solution of polymer C3 with a solids concentration of 27.4%, an Mw of 5600, and an Mn of 2600.

With regard to polyether compound (B) used in Examples 1 to 7 and Comparative Examples 1 to 3 above, the cloud point of a 1% aqueous solution thereof was measured by the method below.
(1) 1 g (solids) of polyether compound sample is weighed in a beaker, 100 ml of thermally distilled water that has been boiled in advance is added thereto, dissolution is carried out while stirring by means of a glass stirrer, and the mixture is allowed to cool to thus give a transparent solution, which is then cooled to about 5°C.
(2) This solution is poured into a test tube (inner diameter ca. 24 mm x length ca. 210 mm) up to a height of 50 mm, a thermometer is placed so that its lower end is 15 mm above the bottom of the test tube, and the test tube is placed in a thermostatted bath set at about 5°C.
(3) The thermostatted bath is heated while agitating the test tube, the temperature rise is slowed after it reaches 5°C below the estimated cloud point, and stirring is carried out well. The temperature at which the solution rapidly becomes cloudy is defined as the cloud point.

### [Evaluation of physical properties of polymer]

The physical properties of polymers E1 to E7 obtained in Examples 1 to 7 and polymers C1 to C3 obtained in Comparative Examples 1 to 3 were tested in accordance with methods a) to c) below. The results are given in Tables 1 and 2. Weight-average molecular weight Mw, number-average molecular weight Mn

The molecular weight of polymers E1 to E7 and C1 to C3 was measured by aqueous GPC using a 0.1 M NaCl and 0.1 M phosphoric acid buffer as eluent. The average molecular weight above was calculated by producing a calibration curve using polyacrylic acid as a reference material.

### Grinding characteristics

Wet grinding was carried out under conditions below, and observation of flowability during grinding and measurement of slurry temperature after dispersion were carried out.

### <Grinding conditions>

Dispersing machine: sand grinder (Igarashi Kikai)
Inorganic pigment: heavy calcium carbonate
Grinding medium: Ottawa sand (1.0 to 1.4 mm)
Rotational speed: 1000 rpm × 50 minutes
Amount of dispersing agent added: 0.7% as resin solids relative to pigment solids
Slurry concentration: 75%
Dispersion medium: distilled water

After grinding, the temperature of the dispersion slurry was measured by means of a thermometer, and the slurry was then filtered using a 100 mesh filter cloth.

### <Evaluation criteria for observation of flowability during grinding>

Excellent: there was little material adhering to the stirring blade of the dispersing machine, and flowability during stirring was very high in the initial stage of grinding. Filtering was possible with almost no resistance.
Good: there was little material adhering to the stirring blade of the dispersing machine, and flowability during stirring was very high in the initial stage of grinding. Filtering was possible with almost no resistance.
Fair: there was some material adhering to the stirring blade of the dispersing machine, and flowability during stirring was low in the initial stage of grinding. There was loss during filtering, with about 60% to 80% passing through.

### (Evaluation criteria for slurry temperature after dispersion)

Heat is generated during grinding when friction between a medium and a pigment is high. The smaller the amount of heat generated, the higher the productivity for grinding, which is desirable.

### Stability over time of pigment slurry

The solids concentration of a pigment slurry obtained by grinding as in b) above was adjusted to 75% by diluting with distilled water, the slurry was allowed to stand at 25°C, and a B-type viscosity was measured immediately after dispersion, 1 day after dispersion, and 7 days after dispersion (25°C, 6 rpm, #2 or #3 rotor). When the viscosity did not increase over time, it was determined that the stability over time was high.

**(Table 1)**

| | | Component (A) | Component (B) | | | | Polymer properties | | |
|---|---|---|---|---|---|---|---|---|---|
| | Polymer | (A) Ethylenically unsaturated carboxylic acid monomer (wt%) | (B) Polyether compound constituents (wt%) | Ethylene oxide content (wt%) | Moleculer weight | Cloud point of 1% Aq. Soln. (°C) | Alkylene oxide group/COOH group in polymer (Molar ratio) | Mw | Mn |
| Ex. 1 | E1 | AA (90%) | PPG (n₁=4, 10%) | - | 250 | >100°C | 0.13 | 6200 | 2500 |
| Ex. 2 | E2 | AA (80%) | PPG (n₁=4, 20%) | - | 250 | >100°C | 0.29 | 6000 | 2500 |
| Ex. 3 | E3 | AA (80%)/MLA (10%) | PPG (n₁=4, 10%) | - | 250 | >100°C | 0.12 | 5500 | 2500 |
| Ex. 4 | E4 | AA (90%) | PPG (n₁=3, 10%) | - | 192 | >100°C | 0.11 | 5400 | 2200 |
| Ex. 5 | E5 | AA (80%) | PEG/PPG (n₁=3, n₂=8, 20%) | 67 | 545 | >100°C | 0.36 | 6000 | 2800 |
| Ex. 6 | E6 | AA (90%) | PPM (n₁=4, 10%) | - | 264 | >100°C | 0.12 | 5800 | 2600 |
| Ex. 7 | E7 | AA (90%) | TPGG (n₁=3, 10%) | - | 266 | >100°C | 0.09 | 5900 | 2600 |
| Comp. Ex. 1 | C1 | AA (100%) | - | - | - | - | - | 5500 | 2800 |
| Comp. Ex. 2 | C2 | AA (72%) | PEG/PPG (n₁=17, n₂=2.5, 28%) | 10 | 1120 | 30°C | 2.51 | Cloudy during polymerization | |
| Comp. Ex. 3 | C3 | AA (50%) | PPG (n₁=4, 50%) | - | 250 | >100°C | 1.15 | 5600 | 2600 |

Abbreviations in the table denote the following.
AA: acrylic acid
MLA: maleic acid
PPG: polypropylene glycol (n1: average number of moles of propylene oxide added)
PEG: polyethylene glycol (n2: average number of moles of ethylene oxide added)
PPM: polypropylene glycol monomethyl ether
TPGG: tripropylene glycol glyceryl ether

**(Table 2)**

| Polymer characteristics | | Grinding characteristics | | Stability of pigment slurry over time | | |
|---|---|---|---|---|---|---|
| | Polymer | Flowability during grinding | Slurry temp. after dispersion(°C) | B type viscosity immediately after dispersion (mPa·s) | B type viscosity 1 day after dispersion (mPa·s) | B type viscosity 7 days after dispersion (sPa·s) |
| Ex. 1 | E1 | Excellent | 82 | 300 | 840 | 1280 |
| Ex. 2 | E2 | Excellent | 80 | 280 | 800 | 1190 |
| Ex. 3 | E3 | Excellent | 84 | 320 | 860 | 1150 |
| Ex. 4 | E4 | Excellent | 83 | 320 | 880 | 1350 |
| Ex. 5 | E5 | Excellent | 78 | 290 | 850 | 1200 |
| Ex. 6 | E6 | Excellent | 82 | 340 | 880 | 1380 |
| Ex. 7 | E7 | Excellent | 84 | 380 | 900 | 1500 |
| Comp. Ex. 1 | C1 | Fair | 98 | 700 | 4960 | 11400 |
| Comp. Ex. 2 | C2 | - | - | - | - | - |
| Comp. Ex. 3 | C3 | Excellent | 80 | 320 | 2400 | 3800 |

As shown in Table 2, the polymers of the Examples gave good dispersion characteristics compared with the polymers of the Comparative Examples. That is, in addition to flowability and dispersibility during wet grinding of heavy calcium carbonate, which is an inorganic pigment, the pigment slurry had excellent stability over time.

### Industrial Applicability

The dispersing agent comprising the water-soluble polymer of the present invention has good dispersion characteristics in an aqueous medium. That is, generation of heat during grinding can be suppressed even with a low amount thereof added, and a pigment slurry with a small particle size can be obtained. Furthermore, no aggregation of pigment and no viscosity increase were observed over a long period of time, and a dispersed slurry had excellent stability over time. In this way, it is useful as an inorganic pigment dispersing agent, particularly in wet grinding applications in a paper making process. In addition, the dispersing agent of the present invention can be expected to exhibit practical long-term stability as an excavated slurry dispersing agent, a dispersing agent for mortar, a dispersing agent for scale, a dispersing agent for a detergent builder, and a dispersing agent for a ceramic powder.

## Claims

1. A dispersing agent comprising a water-soluble polymer and/or an alkali metal salt or ammonium salt of the water-soluble polymer, the water-soluble polymer comprising as essential components (A) an ethylenically unsaturated monocarboxylic acid monomer or an anhydride thereof, or an ethylenically unsaturated dicarboxylic acid monomer or an anhydride thereof, and (B) a polyether compound,
a ratio [(B)/(A)] of the number of moles of alkylene oxide added in component (B) relative to the number of moles of carboxyl group in component (A) being no greater than 0.6, and component (B) being less than 25 weight % relative to the total amount.

2. The dispersing agent according to Claim 1, wherein the polyether compound (B) comprises an alkylene oxide unit having 3 to 4 carbons.

3. The dispersing agent according to Claim 1, wherein a 1% aqueous solution of the polyether compound (B) has a cloud point of at least 80°C.

4. The dispersing agent according to Claim 1, wherein the polyether compound (B) comprises either (b1) an alkylene glycol having a molecular weight of no greater than 700 and having 3 to 4 carbons or a derivative thereof, or (b2) a polyethylene glycol-polypropylene glycol copolymer having a polyethylene glycol constituent amount of at least 60 weught %.
